# EUROPÄISCHE PATENTSCHRIFT

(11) **EP 0 828 954 B1**
(45) Veröffentlichungstag und Bekanntmachung des Hinweises auf die Patenterteilung: **12.04.2000**
(21) Anmeldenummer: 97915463.0
(22) Anmeldetag: 29.03.1997
(51) Int. Cl.: F16D 65/46

(54) **VORRICHTUNG ZUR EINSTELLUNG UND NACHSTELLUNG DER BREMSBACKEN EINER TROMMELBREMSE**
DEVICE FOR SETTING AND ADJUSTING THE BRAKE SHOES OF A DRUM BRAKE
DISPOSITIF DE REGLAGE ET DE RATTRAPAGE DE JEU POUR LES MACHOIRES D'UN FREIN A TAMBOUR

(30) Priorität: 02.04.1996 DE 19613199
(43) Veröffentlichungstag der Anmeldung: 18.03.1998
(73) Patentinhaber: BPW Bergische Achsen Kommanditgesellschaft, 51674 Wiehl (DE)
(72) Erfinder: MÜLLER, Matthias, D-51429 Bergisch Gladbach (DE); JOHANNS, Udo, D-51588 Nümbrecht (DE)
(74) Vertreter: Stenger, Watzke & Ring Patentanwälte
(86) Internationale Anmeldenummer: EP9701605
(87) Internationale Veröffentlichungsnummer: WO9737150

(56) Entgegenhaltungen:
- DE-A- 1 675 126
- DE-C- 3 834 714
- GB-A- 1 152 851

## Beschreibung

Die Erfindung betrifft eine Vorrichtung zur Einstellung und verschleißbedingten Nachstellung der Bremsbacken einer Trommelbremse, bei der die Bremsbelagträger mit einem Ende über eine einstellbare Abstützung an einer Bremsträgerplatte abgestützt und an ihrem anderen Ende mittels einer Zuspanneinrichtung spreizbar sind, wobei die einstellbare Abstützung eine mit einem Widerlager versehene, auf der Bremsträgerplatte befestigte Buchse und eine in dieser Buchse abgestützte Gewindehülse umfaßt, in deren Innengewinde ein durch den Bremsbelagträger unverdrehbar gehaltener Gewindebolzen eingreift, wobei die Gewindehülse durch Drehung eine Abstandsänderung der Enden der Bremsbelagträger bewirkt.

Derartige Vorrichtungen zur Einstellung und verschleißbedingten Nachstellung der Bremsbacken von Trommelbremsen sind bekannt. Um die bei Inbetriebnahme erste Einstellung bzw. eine verschleißbedingte Nachstellung der Bremsbacken zu bewirken, wird bei diesen bekannten Vorrichtungen die sich in der Buchse abstützende Gewindehülse mit Angriffsflächen für ein Werkzeug, insbesondere einen Schraubendreher versehen, so daß die Gewindehülse durch einen Schlitz in der Bremsträgerplatte verdreht werden kann. Da der in das Innengewinde der Gewindehülse eingreifende Gewindebolzen durch den Bremsbelagträger unverdrehbar gehalten ist, ergibt eine Verdrehung der Gewindehülse eine axiale Relativbewegung in der Art einer steigenden Spindel zwischen Gewindehülse und Gewindebolzen. Entsprechend der jeweiligen Drehrichtung läßt sich somit der Abstand zwischen den Enden der beiden Bremsbelagträger einstellen, um einerseits bei einer Montage der Trommelbremse bzw. beim Einbau neuer Bremsbelagträger eine Einstellung der Bremsbacken vorzunehmen und andererseits die Bremsbacken durch Spreizung der Belagträgerenden nachzustellen, wenn deren Bremsbelag um einen bestimmten Betrag verschlissen ist.

Die bekannte Vorrichtung zur Einstellung und Nachstellung der Bremsbacken von Trommelbremsen hat verschiedene Nachteile. Die an der Gewindehülse ausgebildeten Angriffsflächen für einen Schraubendreher sind durch das in der Bremsträgerplatte ausgebildete Langloch schwer zugänglich. Eine Betätigung dieses Werkzeuges erfordert darüber hinaus einen gewissen Freiraum seitlich der Bremsträgerplatte, der beispielsweise bei Wohnwagen wegen des in der Nähe verlaufenden Langträgers des Fahrzeuguntergestells kaum vorhanden ist. Schließlich ergeben sich unterschiedliche Drehrichtungen für die Gewindehülse in Abhängigkeit davon, ob sich die Trommelbremse an der linken oder rechten Fahrzeugseite befindet. Bei unachtsamer Betätigung kann es somit zu unerwünschten Fehleinstellungen kommen.

Der Erfindung liegt die **Aufgabe** zugrunde, die eingangs beschriebene Vorrichtung zur Einstellung und Nachstellung der Bremsbacken einer Trommelbremse unter Vermeidung der bisherigen Nachteile derart weiterzubilden, daß bei einfacher Konstruktion eine bedienungsfreundliche Nachstellung mit guter Zugänglichkeit geschaffen wird.

Die **Lösung** dieser Aufgabenstellung durch die Erfindung ist dadurch gekennzeichnet, daß an der Bremsträgerplatte ein mit einem Betätigungselement oder einer Schlüsselfläche für ein Werkzeug versehenes Ritzel drehbar gelagert ist, dessen Verzahnung selbsthemmend in eine Verzahnung der Gewindehülse eingreift.

Durch diese erfindungsgemäße Weiterbildung der bekannten Vorrichtung ergibt sich nicht nur eine gute Zugänglichkeit des für eine Einstellung bzw. Nachstellung zu betätigenden Bauteils, sondern auch der Vorteil, daß die auch unter beengten Raumverhältnissen durchführbare Einstellung bzw. Nachstellung bezüglich der Drehrichtung des Ritzels unabhängig davon durchgeführt wird, ob es sich um eine auf der rechten oder linken Fahrzeugseite angeordnete Trommelbremse handelt. Diesbezügliche Bedienungsfehler werden somit vermieden. Außerdem entfällt die Ausbildung eines Langloches in der Bremsträgerplatte, wodurch der Schutz der Zuspanneinrichtung gegen Verschmutzung verbessert wird.

Das an der Bremsträgerplatte drehbar gelagerte Ritzel ist entweder mit einem Betätigungselement für eine unmittelbare Betätigung von Hand oder mit einer geeigneten Schlüsselfläche versehen, so daß übliche Handwerkzeuge eingesetzt werden können, vorzugsweise Schraubenschlüssel, die auch bei beengten Raumverhältnissen problemlos an die Schlüsselflächen des Ritzels angesetzt werden können. Um ein unerwünschtes selbsttätiges Verstellen der Gewindehülse zu verhindern, ist die Verzahnung zwischen Ritzel und Gewindehülse selbsthemmend ausgeführt. Dies kann zum Beispiel dadurch erfolgen, daß die Drehachse des Ritzels gegenüber der Drehachse der Gewindehülse seitlich versetzt ist. Die in eine Verzahnung der Gewindehülse eingreifende Verzahnung des Ritzels kann im übrigen entsprechend den jeweiligen Anforderungen ausgebildet werden, wobei auch einfache Verzahnungen verwendet werden können, da es sich nicht um ein Getriebebauteil handelt, sondern um ein Verstellglied, das verhältnismäßig selten benutzt wird.

Bei einer bevorzugten, insbesondere für Gleitbackenbremsen bestimmten Ausführungsform der Erfindung ermöglicht die Verzahnung zwischen Ritzel und Gewindehülse eine axiale Verschiebung der Gewindehülse in der Buchse relativ zur Drehachse des Ritzels.

Mit der Erfindung wird ferner vorgeschlagen, die Verzahnung der Gewindehülse in der Art einer einfachen Stirnverzahnung auszubilden und das Ritzel mit mehreren auf seiner Stirnfläche in axialer Richtung hervorstehenden kegelförmigen Zähnen zu versehen. Hierdurch ergibt sich eine besonders einfache und preiswert herzustellende selbsthemmende Verzahnung.

Zur zusätzlichen Sicherung der Gewindehülse gegen ein versehentliches Verdrehen und damit ein Verstellen der Bremse wird schließlich vorgeschlagen, daß die Abstützung ein Rastelement mit einem federnd daran ausgebildeten, in die Verzahnung der Gewindehülse eingreifenden Rastabschnitt aufweist, und daß sich der Rastabschnitt parallel zur Verstellrichtung der Gewindehülse und mindestens über eine axiale Länge erstreckt, die der axialen Verschiebbarkeit der an der Gewindehülse ausgebildeten Verzahnung entspricht.

Auf der Zeichnung ist ein Ausführungsbeispiel der erfindungsgemäßen Vorrichtung zur Einstellung und Nachstellung der Bremsbacken einer Trommelbremse dargestellt, und zwar zeigen:
- Fig. 1: eine Ansicht einer Trommelbremse,
- Fig. 2: einen Schnitt gemäß der Schnittlinie II - II in Fig. 1 durch die Abstützung,
- Fig. 3: einen Schnitt gemäß der Schnittlinie III - III in Fig. 2 zur Darstellung der Verzahnung zwischen Ritzel und Gewindehülse,
- Fig. 4a: einen Schnitt gemäß der Schnittlinie IV-IV in Fig. 2 durch die Abstützung, und zwar bei Vorwärtsfahrt und
- Fig. 4b: einen Schnitt gemäß der Schnittlinie IV-IV in Fig. 1 durch die Abstützung, und zwar bei Rückwärtsfahrt, ohne daß die Bremse aufläuft.

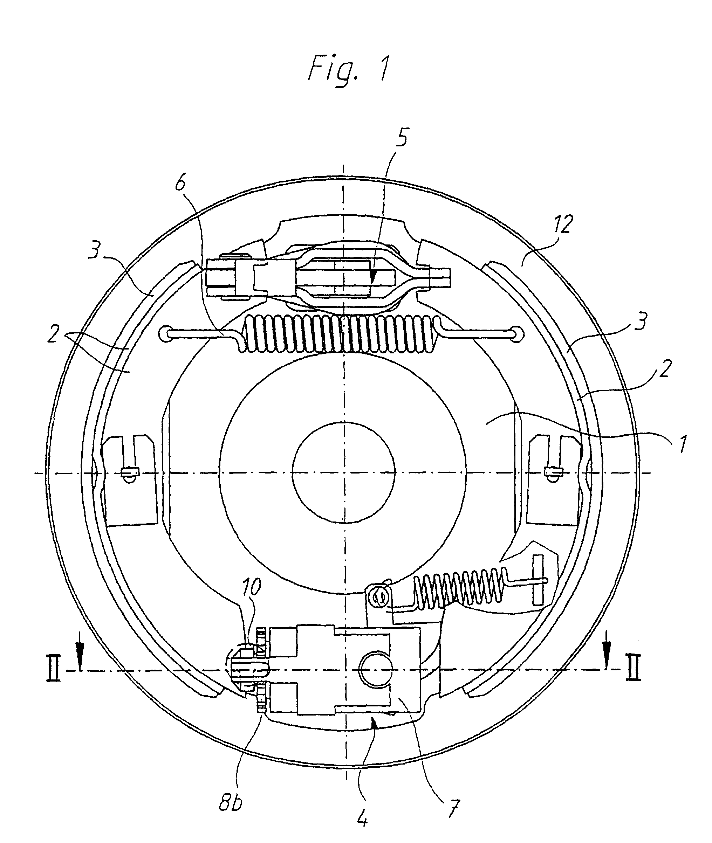

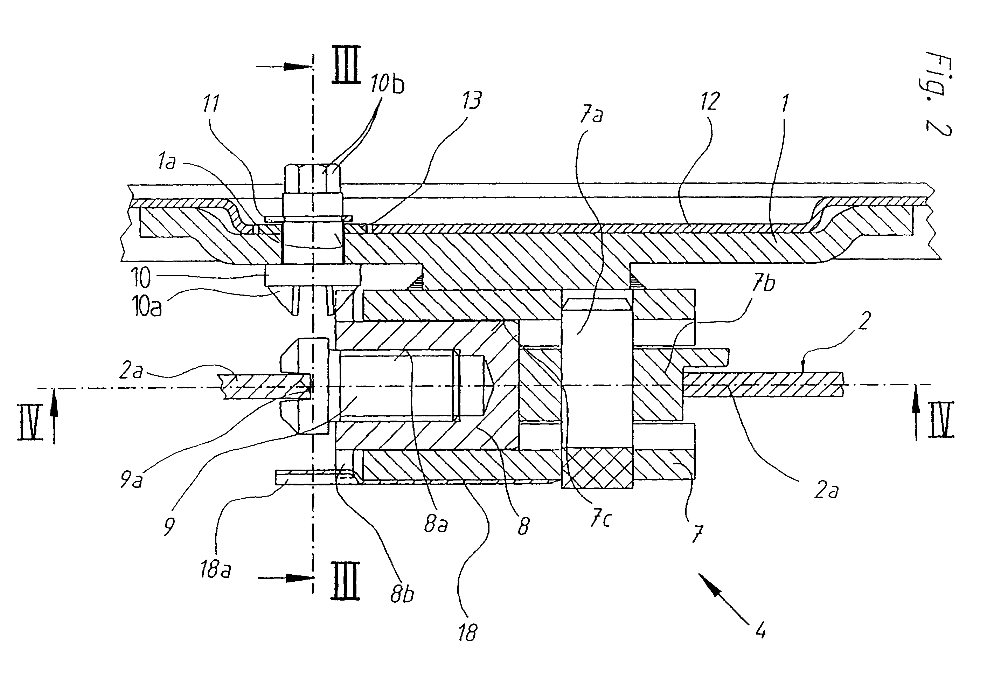

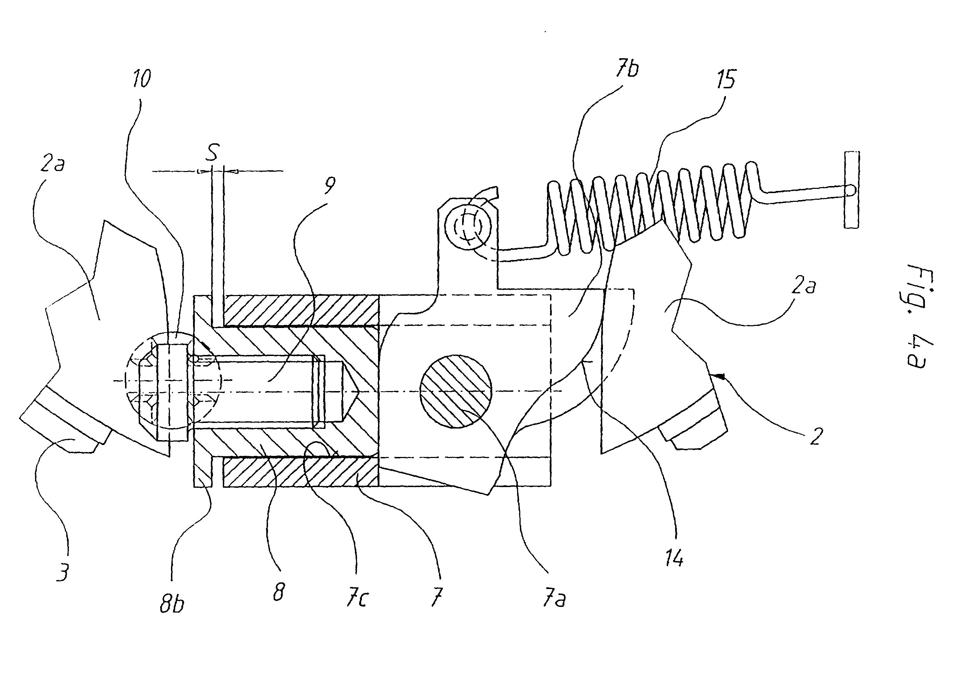

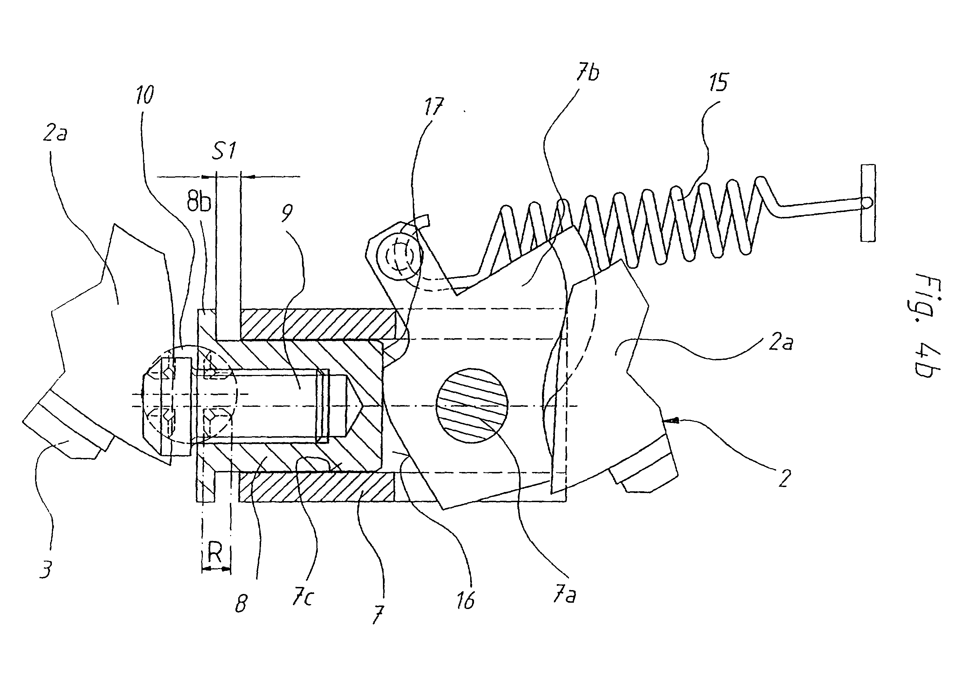

Die Ansicht in Fig. 1 zeigt schematisch eine Trommelbremse mit einer Bremsträgerplatte 1, an der zwei Bremsbelagträger 2 mit jeweils einem Bremsbelag 3 gelagert sind. Die Bremsbelagträger 2 sind jeweils mit einem Ende an einer Abstützung 4 abgestützt, die im einzelnen in den Fig. 2, 4a und 4b vergrößert dargestellt ist. Das andere Ende der beiden Bremsbelagträger 2 ist durch eine Zuspanneinrichtung 5 spreizbar, die beim dargestellten Ausführungsbeispiel als sogenanntes Spreizschloß ausgeführt ist. Um die ordnungsgemäße Lage der beiden Bremsbelagträger 2 zu sichern, sind diese durch eine parallel zur Zuspanneinrichtung 5 angeordnete Zugfeder 6 belastet.

Wie die vergrößerten Darstellungen der Abstützung 4 in den Schnittdarstellungen der Fig. 2, 4a und 4b erkennen lassen, umfaßt die Abstützung 4 eine Buchse 7, in der auf einer Achse 7a ein als Widerlager der Buchse 7 dienendes Stützelement 7b schwenkbar gelagert ist. An einer aus der Buchse 7 herauskragenden Kontur des Stützelements 7b liegt das Ende 2a des einen der beiden Bremsbelagträger 2 an. In der Buchse 7 ist eine zylindrische Bohrung 7c ausgebildet, in der eine Gewindehülse 8 angeordnet ist. Diese Gewindehülse 8 stützt sich in axialer Richtung an dem Stützelement 7b der Buchse 7 ab, wie dies insbesondere die Figuren 4a und 4b erkennen lassen.

In ein in der Gewindehülse 8 ausgebildetes Innengewinde 8a ist ein Gewindebolzen 9 eingeschraubt, der an seinem freien Ende mit einem Schlitz 9a versehen ist. In diesen Schlitz 9a greift wiederum das Ende 2a des Steges des anderen Bremsbelagträgers 2 ein, wie besonders deutlich aus Fig. 2 hervorgeht.

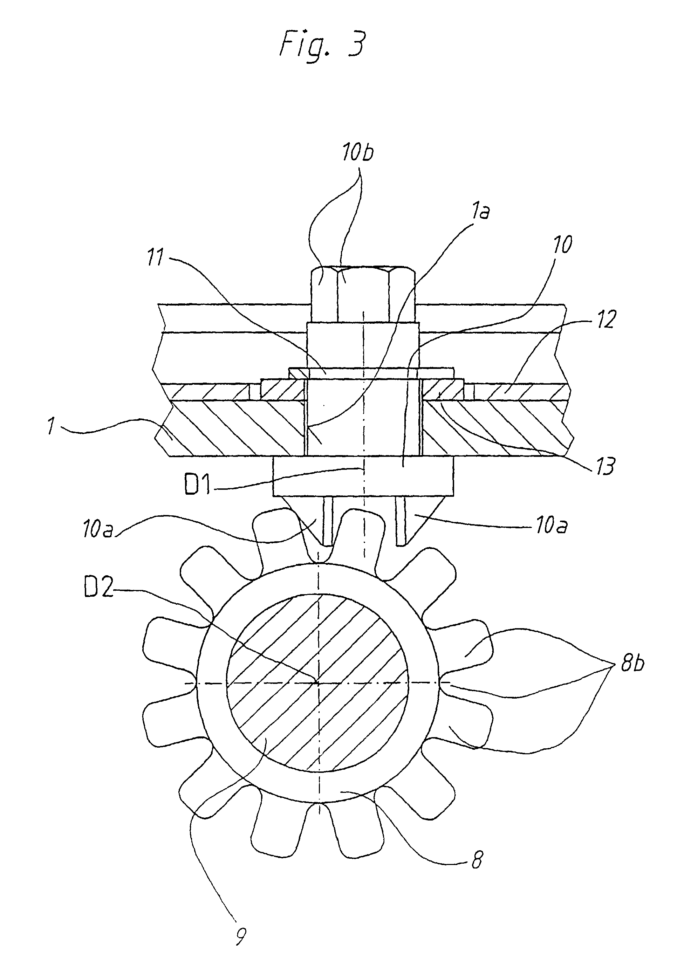

Das außerhalb der Buchse 7 liegende Ende der Gewindehülse 8 ist beim Ausführungsbeispiel mit einer in der Art einer einfachen Stirnverzahnung ausgebildeten Verzahnung 8b versehen, die in der Stirnansicht am besten in Fig. 3 zu erkennen ist. In diese Verzahnung 8b greift die Verzahnung eines Ritzels 10 ein, die beim Ausführungsbeispiel aus vier auf einer Stirnfläche des Ritzels 10 in axialer Richtung hervorstehenden kegelförmigen Zähnen 10a besteht. Die Drehachse D1 des Ritzels 10 ist gegenüber der rechtwinklig hierzu verlaufenden Drehachse D2 der Gewindehülse 8 seitlich versetzt, wie in Fig. 3 deutlich zu erkennen ist. Hierdurch bilden die Zähne 10a des Ritzels 10 und die Verzahnung 8b der Gewindehülse 8 einen selbsthemmenden Kegeltrieb, so daß bereits ohne zusätzliche Maßnahmen eine unerwünschte Verdrehung, beispielsweise aufgrund von Schwingungen vermieden wird.

Wie die Fig. 2 und 3 weiterhin erkennen lassen, ist das Ritzel 10 in einer Lagerbohrung 1a der Bremsträgerplatte 1 drehbar gelagert und durch einen Sprengring 11 in axialer Richtung gesichert. An seinem freien Ende ist das Ritzel 10 mit Schlüsselflächen 10b versehen, die beim Ausführungsbeispiel als Sechskant ausgeführt sind, aber auch anderweitig ausgeführt sein können, beispielsweise in Form eines Schlitzes für einen Schraubendreher.

Die Zeichnungen zeigen weiterhin, daß zusätzlich zur Bremsträgerplatte 1 beim Ausführungsbeispiel der dargestellten Trommelbremse ein Abdeckblech 12 vorgesehen ist, das die innenliegende Seite der Trommelbremse vollflächig abdeckt. Im Bereich der Lagerung des Ritzels 10 besitzt dieses Abdeckblech 12 eine Aussparung, in der eine Unterlegscheibe 13 als Anlage für den Sprengring 11 angeordnet ist.

Um die aus Bremsbelagträger 2 und Bremsbelag 3 bestehenden Bremsbacken der voranstehend erläuterten Trommelbremse einerseits bei der Montage bzw. beim Einbau neuer Bremsbacken einzustellen und andererseits entsprechend dem jeweiligen Verschleiß der Bremsbeläge 3 nachzustellen, ist es lediglich erforderlich, ein Werkzeug, beim dargestellten Ausführungsbeispiel einen Maul- oder Ringschlüssel an die Schlüsselflächen 10b des Ritzels 10 anzusetzen und mit diesem das Ritzel 10 in der gewünschten Richtung zu verdrehen. Bei der Verwendung eines Schraubenschlüssels wird hierfür nur wenig Raum beansprucht, der auch bei den beengten Raumverhältnissen beispielsweise eines Wohnwagenfahrgestells zur Verfügung steht.

Bei einer Verdrehung des Ritzels 10 erfolgt durch dessen in die Verzahnung 8b der Gewindehülse 8 eingreifende Zähne 10a eine entsprechende Verdrehung der in der Bohrung 7c der Buchse 7 drehbar gelagerten Gewindehülse 8. Da in das Innengewinde 8a der Gewindehülse 8 der Gewindebolzen 9 eingreift und da dieser Gewindebolzen 9 über seinen Schlitz 9a unverdrehbar durch das Stegende 2a des Bremsbelagträgers 2 festgehalten wird, bewirkt eine Verdrehung der Gewindehülse 8 eine axiale Relativbewegung zwischen der sich in der Buchse 7 abstützenden Gewindehülse 8 einerseits und dem Gewindebolzen 9 andererseits. Entsprechend der gewählten Drehrichtung erfolgt somit eine Vergrößerung oder eine Verkleinerung des Abstandes zwischen den Stegenden 2a der beiden Bremsbelagträger 2.

Die Figuren 2, 4a und 4b lassen ferner erkennen, daß in der Buchse 7 der Abstützung 4 das Stützelement 7b verschwenkbar gelagert ist. Das Stützelement 7b dient als Widerlager für den in der Zeichnung rechts dargestellten Bremsbelagträger 2. Hierzu stützt sich das Ende 2a dieses Bremsbelagträgers 2 an einer Stützfläche 14 des Stützelementes 7b ab. Diese Stützfläche 14 ist mit einer Kontur dergestalt versehen, daß das Stützelement 7b bei umgekehrter Drehrichtung der Bremstrommel, also bei Rückwärtsfahrt, verschwenkt, wobei sich der Bremsbackenträger 2 von der Bremstrommel entfernt. Diese Funktionsweise ergibt sich aus Fig. 4a einerseits und Fig. 4b andererseits: Bei Rückwärtsfahrt ist der auf der Zeichnung rechts dargestellte Bremsbelagträger 2 der ablaufende Bremsbelagträger, wodurch sich dieser mit seinem Ende 2a an der Kontur der Stützfläche 14 entlangschiebt, und das Stützelement 7b dieser Kraft durch das in Fig. 4b dargestellte Verschwenken ausweicht. Das Verschwenken des Stützelementes 7 erfolgt hierbei entgegen der Kraft einer Feder 15. In der in Fig. 4b dargestellten, verschwenkten Lage des Stützelementes 7b entfernt sich der ablaufende Bremsbelagträger 2 von der Bremstrommel, so daß die Bremswirkung vollständig aufgehoben ist, und das Fahrzeug rückwärts bewegt werden kann.

Der Stützfläche 14 gegenüberliegend ist das Stützelement 7b mit einer zweiten Stützfläche 16 versehen, an der die Stirnfläche 17 der Gewindehülse 8 anliegt. Die Kontur der zweiten Stützfläche 16 ist dergestalt, daß beim Verschwenken des Stützelements 7b die Gewindehülse 8 axial in der zylindrischen Bohrung 7c der Buchse 7 verschoben wird. Die Figuren 4a und 4b verdeutlichen dies anhand der darin eingetragenen Abstände S und S1 zwischen der Verzahnung 8b und der vorderen Stirnfläche der Buchse 7.

Beim Verschwenken des Stützelements 7b in die in Fig. 4b dargestellte Stellung vergrößert sich dieser Abstand von S auf S1. Dies bewirkt bei erneutem Wechsel von Rückwärtsfahrt auf Vorwärtsfahrt eine von dem links dargestellten Bremsbelagträger über den Gewindebolzen 9 und die Gewindehülse 8 auf das Stützelement 7b ausgeübte Rückstellkraft. Diese Rückstellkraft addiert sich zu der Rückstellkraft der Feder 15, so daß sich die Abstützung leichter wieder in ihre Normalposition für Vorwärtsfahrt umstellt.

Wenn entsprechend den Figuren 4a und 4b der Abstand zwischen der Verzahnung 8b und der vorderen Stirnfläche der Buchse 7 sich von S auf S1 vergrößert, darf das Ritzel 10 dieser Bewegung der Gewindehülse 8 keinen Widerstand entgegensetzen. Hierzu ist die auf der Zeichnung dargestellte Gestaltung der Zähne 10a des Ritzels 10 von Vorteil: Die radiale Erstreckung R der Zähne 10a des Ritzels 10 ist geringer als der halbe Durchmesser des Ritzels 10. Ferner ist die radiale Erstreckung R der Zähne 10a im Eingriffsbereich mit der Verzahnung 8b der Gewindehülse größer als die maximale axiale Verschiebbarkeit S1-S der Gewindehülse 8 in der Buchse 7. Die Verzahnung 8b kann daher quer zu den Zähnen 10a des Ritzels 10 verfahren, ohne an diesen Zähnen 10a hängen zu bleiben.

Fig. 2 schließlich läßt noch erkennen, daß die Abstützung 4 ein Rastelement 18 mit einem federnd daran ausgebildeten, in die Verzahnung 8b der Gewindehülse 8 eingreifenden Rastabschnitt 18a aufweist. Das Rastelement 18 kann aus einem gestanzten Blech aus Federstahl bestehen und ist vorzugsweise auf der Achse 7a des Widerlagers fixiert und so gegen ein Verstellen in axialer Richtung und in Umfangsrichtung gesichert. In radialer Richtung ist der Rastabschnitt 18b federnd ausgebildet, so daß er eine Betätigung des Ritzels 10 nicht behindert, sondern dieser lediglich einen gewissen Widerstand entgegensetzt.

Um zu gewährleisten, daß der Rastabschnitt 18a unabhängig von der axialen Lage der Gewindehülse 8 innerhalb der Buchse 7 in Eingriff mit der Verzahnung 8b steht, erstreckt sich der Rastabschnitt 18a über eine Länge, die der axialen Verschiebbarkeit der Verzahnung 8b entspricht. Beim Verschieben der Gewindehülse 8 innerhalb der zylindrischen Bohrung 7c der Buchse 7 wird daher zugleich die Verzahnung 8b durch den federnden Rastabschnitt 18a geführt.

### Bezugszeichenliste

- 1: Bremsträgerplatte
- 1a: Lagerbohrung
- 2: Bremsbelagträger
- 2a: Stegende
- 3: Bremsbelag
- 4: Abstützung
- 5: Zuspanneinrichtung
- 6: Zugfeder
- 7: Buchse
- 7a: Achse
- 7b: Stützelement, Widerlager
- 7c: zylindrische Bohrung
- 8: Gewindehülse
- 8a: Innengewinde
- 8b: Verzahnung
- 9: Gewindebolzen
- 9a: Schlitz
- 10: Ritzel
- 10a: Zahn
- 10b: Schlüsselfläche
- 11: Sprengring
- 12: Abdeckblech
- 13: Unterlegscheibe
- 14: Stützfläche
- 15: Feder
- 16: Stützfläche
- 17: Stirnfläche
- 18: Rastelement
- 18a: Rastabschnitt
- S: axialer Abstand
- S1: axialer Abstand
- R: Erstreckung der Zähne des Ritzels
- D1: Drehachse
- D2: Drehachse

## Patentansprüche

1. Vorrichtung zur Einstellung und verschleißbedingten Nachstellung der Bremsbacken einer Trommelbremse, bei der die Bremsbelagträger (2) mit einem Ende (2a) über eine einstellbare Abstützung (4) an einer Bremsträgerplatte (1) abgestützt und an ihrem anderen Ende mittels einer Zuspanneinrichtung (5) spreizbar sind, wobei die einstellbare Abstützung (4) eine mit einem Widerlager (7b) versehene, auf der Bremsträgerplatte (1) befestigte Buchse (7) und eine in dieser Buchse (7) abgestützte Gewindehülse (8) umfaßt, in deren Innengewinde (8a) ein durch den Bremsbelagträger (2) unverdrehbar gehaltener Gewindebolzen (9) eingreift, wobei die Gewindehülse (8) durch Drehung eine Änderung des Abstands zwischen den Enden (2a) der Bremsbelagträger (2) bewirkt,
**dadurch gekennzeichnet,**
daß an der Bremsträgerplatte (1) ein mit einem Betätigungselement oder einer Schlüsselfläche (10b) für ein Werkzeug versehenes Ritzel (10) drehbar gelagert ist, dessen Verzahnung selbsthemmend in eine Verzahnung (8b) der Gewindehülse (8) eingreift.

2. Vorrichtung nach Anspruch 1, insbesondere für Gleitbackenbremsen, dadurch gekennzeichnet, daß die Verzahnung zwischen Ritzel (10) und Gewindehülse (8) eine axiale Verschiebung der Gewindehülse (8) in der Buchse (7) relativ zur Drehachse des Ritzels (10) ermöglicht.

3. Vorrichtung nach Anspruch 2, dadurch gekennzeichnet, daß die radiale Erstreckung (R) der Zähne (10a) des Ritzels (10) geringer als der halbe Durchmesser des Ritzels (10) und größer als die axiale Verschiebbarkeit der Gewindehülse (8) in der Buchse (7) ist.

4. Vorrichtung nach einem der vorangehenden Ansprüche, dadurch gekennzeichnet, daß die Drehachse (D1) des Ritzels (10) gegenüber der Drehachse (D2) der Gewindehülse (8) seitlich versetzt ist.

5. Vorrichtung nach mindestens einem der Ansprüche 1 bis 4, dadurch gekennzeichnet, daß die Verzahnung (8b) der Gewindehülse (8) in der Art einer einfachen Stirnverzahnung ausgebildet und das Ritzel (10) mit mehreren auf seiner Stirnfläche in axialer Richtung hervorstehenden kegelförmigen Zähnen (10a) versehen ist.

6. Vorrichtung nach einem der Ansprüche 2 bis 5, dadurch gekennzeichnet, daß die Abstützung (4) ein Rastelement (18) mit einem federnd daran ausgebildeten, in die Verzahnung (8b) der Gewindehülse (8) eingreifenden Rastabschnitt (18a) aufweist, und daß sich der Rastabschnitt (18a) parallel zur Verstellrichtung der Gewindehülse (8) und mindestens über eine axiale Länge erstreckt, die der axialen Verschiebbarkeit der an der Gewindehülse (8) ausgebildeten Verzahnung (8b) entspricht.

## Claims

1. Device for the adjustment and readjustment due to wear of the brake shoes of a drum brake, in which the brake-lining holders (2) are supported with one end (2a) on a brake anchor plate (1) via an adjustable support (4) and at its other end can be expanded by means of a brake-application device (5), the adjustable support (4) comprising a bushing (7), which is provided with an abutment (7b) and is fastened on the brake anchor plate (1), and a threaded sleeve (8)which is supported in this bushing (7) and in whose internal thread (8a) a threaded bolt (9) engages, which threaded bolt is held non-rotatably by the brake-lining holder (2), the threaded sleeve (8) causing, by means of rotation, a change in the distance between the ends (2a) of the brake-lining holders (2), characterized in that a pinion (10), which is provided with an actuating element or a key surface (10b) for a tool, is mounted rotatably on the brake anchor plate (1) and its toothing engages in a toothing (8b) of the threaded sleeve (8) in a self-locking manner.

2. Device according to Claim 1, in particular for sliding shoe brakes, characterized in that the toothing between the pinion (10) and threaded sleeve (8) enables the threaded sleeve (8) to be displaced axially in the bushing (7) relative to the axis of rotation of the pinion (10).

3. Device according to Claim 2, characterized in that the radial extent (R) of the teeth (10a) of the pinion (10) is smaller than half the diameter of the pinion (10) and greater than the axial displaceability of the threaded sleeve (8)in the bushing (7).

4. Device according to one of the preceding claims, characterized in that the axis of rotation (D1) of the pinion (10) is offset laterally with respect to the axis of rotation (D2) of the threaded sleeve (8).

5. Device according to at least one of Claims 1 to 4, characterized in that the toothing (8b) of the threaded sleeve (8) is designed in the manner of a simple spur-gear toothing, and the pinion (10) is provided with a plurality of conical teeth (10a) protruding in the axial direction on the end surface of said toothing.

6. Device according to one of Claims 2 to 5, characterized in that the support (4) has a latching element (18) having a latching section (18a) which is formed in a resilient manner on it and engages in the toothing (8b) of the threaded sleeve (8), and in that the latching section (18a) extends parallel to the adjustment direction of the threaded sleeve (8) and at least over an axial length which corresponds to the axial displaceability of the toothing (8b) formed on the threaded sleeve (8).

## Revendications

1. Dispositif destiné au réglage et au rattrapage de jeu dû à l'usure des mâchoires d'un frein à tambour, dans le cas duquel les supports (2) de garniture de frein prennent appui par l'une de leurs extrémités (2a) sur une plaque (1) de support de frein par l'intermédiaire d'un support réglable (4), et peuvent être écartés au niveau de leur autre extrémité au moyen d'un dispositif d'application (5), le support réglable (4) comportant une douille (7) munie d'une butée (7b), qui est fixée sur la plaque (1) de support de frein, et un manchon taraudé (8) qui prend appui dans cette douille (7), dans le filetage intérieur (8a) duquel s'engage un boulon fileté (9) qui est retenu par le support (2) de garniture de frein de façon à ne pas pouvoir tourner, le manchon taraudé (8) assurant par rotation une modification de la distance entre les extrémités (2a) des supports (2) de garniture de frein,
caractérisé en ce que
un pignon (10) muni d'un élément d'actionnement, ou d'une surface d'engagement de clé (10b), destiné à un outil est monté en rotation sur la plaque (1) de support de frein, dont la denture s'engage de façon autobloquante dans une denture (8b) du manchon taraudé (8).

2. Dispositif selon la revendication 1, destiné notamment à des freins à mâchoires flottantes, caractérisé en ce que la denture entre le pignon (10) et le manchon taraudé (8) permet un déplacement axial du manchon taraudé (8) dans la douille (7) par rapport à l'axe de rotation du pignon (10).

3. Dispositif selon la revendication 2, caractérisé en ce que l'extension radiale (R) des dents (10a) du pignon (10) est plus faible que le demi-diamètre du pignon (10), et plus important que le déplacement axial du manchon taraudé (8) dans la douille (7).

4. Dispositif selon l'une quelconque des revendications précédentes, caractérisé en ce que l'axe de rotation (D1) du pignon (10) est décalé latéralement par rapport à l'axe de rotation (D2) du manchon taraudé (8).

5. Dispositif selon l'une au moins des revendications 1 à 4, caractérisé en ce que la denture (8b) du manchon taraudé (8) est réalisée à la manière d'une simple denture droite, et en ce que le pignon (10) est muni de plusieurs dents (10a) coniques faisant saillie de sa face frontale dans la direction axiale.

6. Dispositif selon l'une quelconque des revendications 2 à 5, caractérisé en ce que le support (4) comporte un élément d'encliquetage (18), sur lequel est formé un tronçon d'encliquetage élastique (18a) qui s'engage dans la denture (8b) du manchon taraudé (8), et en ce que le tronçon d'encliquetage (18a) s'étend parallèlement à la direction de déplacement du manchon taraudé (8), et au moins sur une longueur axiale qui correspond au déplacement axial de la denture (8b) formée sur le manchon taraudé (8).
